# FASCICULE DE BREVET EUROPEEN

(11) **EP 3 325 828 B1**
(45) Date de publication et mention de la délivrance du brevet: **29.01.2020**
(21) Numéro de dépôt: 16753954.3
(22) Date de dépôt: 22.07.2016
(51) Int. Cl.: F16B 39/284

(54) **BOULON À DÉVISSAGE FREINÉ**
BOLZEN MIT EINGESCHRÄNKTEM LÖSEN
BOLT WITH RESTRAINED UNSCREWING

(30) Priorité: 22.07.2015 FR 1556929
(43) Date de publication de la demande: 30.05.2018
(73) Titulaire: RDO Alpha, 08320 Vireux Molhain (FR)
(72) Inventeur: RODRIGUES DE OLIVEIRA, Carlos, 08600 Givet (FR)
(74) Mandataire: Hege, Frédéric
(86) Numéro de dépôt international: PCT/FR2016/051914
(87) Numéro de publication internationale: WO 2017/013377

(56) Documents cités:
- EP-A2- 1 069 324
- EP-A2- 1 296 070
- US-A- 2 190 174
- US-A- 3 543 826
- US-A- 6 077 013
- US-A1- 2014 147 230

## Description

L'invention concerne le domaine de la boulonnerie et la visserie. Elle concerne plus particulièrement un boulon à dévissage freiné.

Un boulon est un organe d'assemblage composé d'un écrou et d'une vis pouvant alternativement être vissés ou dévissés le long d'un filetage continu selon un besoin particulier.

Ils sont généralement constitués en métal ou alliage de métaux tel que l'acier, acier inoxydable, l'aluminium, le platine, etc. mais peuvent être constitué de toute autre matière répondant à des critères de résistance.

Les boulons agissent comme des frettes dont l'élasticité permet de maintenir le serrage des pièces malgré l'influence de facteurs extérieurs tels que des actions mécaniques, des vibrations ou encore des élévations de température. Une ou plusieurs rondelles placées de part et d'autre des pièces permettent de mieux répartir l'effort de compression, de reprendre le matage éventuel des surfaces et/ou de protéger le substrat de déformations non désirées. Un écrou supplémentaire (contre-écrou) peut venir freiner l'assemblage et éviter qu'il se desserre.

D'autres dispositifs permettent d'éviter le desserrage de l'écrou sur le pas de vis, par arrêt mécanique (rondelles à rabattre, perçage et passage d'un fil dans le domaine de l'aviation, goupillage, écrous à créneaux), ou par effet du serrage notamment les rondelles freins fendues et élastiques, ondulées, crantées.

L'écrou lui-même peut présenter des moyens de freinage destiné à empêcher un desserrage accidentel par les vibrations. De tels moyens sont par exemple une fente permettant un écrasement qui diminue le diamètre (fente dans l'axe) ou diminue le pas (fente perpendiculaire à l'axe), ou encore, des écrous munis de bague en polymère, ils portent aussi le nom d'écrous autobloquants. Il existe aussi des systèmes de collage par des adhésifs anaérobies, démontables par chauffage ou par force brute.

En particulier le document US2190174 divulgue un écrou comportant comme moyen de frein, quelques pas d'un filetage de diamètre nominal identique au reste du filetage, mais avec des filets plus hauts, de sortent que les crêtes de ces quelques filets s'étendent jusqu'au fond des filets de la vis qui vient se visser dans l'écrou. Cette solution permet un blocage de l'écrou, et en même temps une étanchéité du boulon une fois monté, et est utilisée en particulier pour des conduites de gaz. Toutefois la crête du filet de l'écrou appuie sur le fond du filet de la vis, et emporte de la matière. Cette matière vient ensuite se déposer entre la vis et l'écrou, et occasionne un grippage. Le démontage devient alors très difficile, voire impossible.

D'autres vis, écrous et/ou boulons sont connus par US 2014/147230 A1, EP 1 296 070 A2, US 6 077 013 A, EP 1 069 324 A2 et US 3 543 826 A.

Selon l'invention, on appellera diamètre de filetage le diamètre externe de la vis (de crête des filets) ou le diamètre en fond de filet de l'écrou.

La présente invention telle que définie dans les revendications adjointes a donc pour objet de proposer de nouveaux moyens afin de répondre aux inconvénients de l'art antérieur. Il s'agit plus particulièrement de proposer un boulon à dévissage freiné composé de deux éléments, une vis et un écrou, dont l'un comprenant dans le sens axial au moins trois parties étagées de filet continu, à savoir une partie d'introduction pour introduire la vis dans l'écrou, une partie de freinage et une partie intermédiaire reliant la partie d'introduction à la partie de freinage, caractérisé en ce que ladite partie de freinage présente un diamètre de filetage constant et différent du diamètre de filetage de la partie d'introduction, en particulier un diamètre de filetage plus grand s'il s'agit de la vis, plus petit s'il s'agit de l'écrou.

Grâce à ces dispositions, le vissage comme le dévissage demande plus d'effort dès qu'on arrive dans partie de freinage, et on obtient donc bien un boulon à dévissage freiné.

Selon d'autres caractéristiques :
- le filetage continu peut présenter le même pas et la même hauteur le long de la partie d'introduction, la partie intermédiaire et la partie de freinage, permettant ainsi un contact plan entre les filetages de la vis et de l'écrou, en évitant le contact au niveau de la crête du filetage, ce qui permet d'éviter un arrachage de matière et un grippage,
- la partie d'introduction peut représenter au minimum un pas de filetage, permettant d'assurer l'orientation et la prise de la vis par l'écrou avant d'arriver dans la partie de freinage,
- la partie de freinage peut représenter au minimum un pas de filetage, permettant d'assurer un minimum de freinage, en particulier une longueur d'au moins un tiers de la longueur axiale de l'écrou, permettant un freinage fiable et efficace,
- le ratio entre le diamètre de filetage de la partie d'introduction et le diamètre de filetage de la partie de freinage pour une vis, son inverse pour un écrou, peut être compris entre 0,92 et 0,96, une valeur trop proche de 1 faisant courir le risque de ne pas freiner pour certains couples vis-écrou, et une valeur trop en dessous de 0,92 faisant courir le risque d'un coincement ou encore d'une détérioration de l'écrou lors du vissage.

L'invention concerne aussi une vis selon la revendication 6.

L'invention concerne encore un écrou selon la revendication 7.

L'invention concerne enfin un procédé de fabrication d'un écrou caractérisé en ce que :
- on introduit un écrou de diamètre de filetage constant, dans une filière comportant une première partie cylindrique de section sensiblement égale à la section de l'écrou, une deuxième partie cylindrique homothétique à la première partie cylindrique, de diamètre plus petit et munie en son extrémité éloignée de la première partie cylindrique d'un fond, et une partie intermédiaire reliant la première partie cylindrique à la deuxième partie cylindrique de manière continue,
- on réalise un filage par frappe à froid ou par presse sur l'un des sommets de l'écrou en sorte de réduire, sur une partie de sa longueur axiale, ses dimensions transversales ainsi que le diamètre interne de son trou taraudé.

Selon un mode préféré de réalisation de l'invention, la partie intermédiaire est inclinée par rapport à l'axe des cylindres d'un angle au plus égal à 20°.

D'autres caractéristiques et avantages de la présente invention apparaîtront à la lecture de la description détaillée qui va suivre se rapportant à un exemple de réalisation donné à titre indicatif et non limitatif.

La compréhension de cette description sera facilitée en se référant aux dessins joints, dans lesquels :
- la figure 1 représente schématiquement une vue en coupe d'un écrou selon l'invention ;
- la figure 2 représente schématiquement une vue en coupe d'une vis selon l'invention ;
- la figure 3 représente schématiquement une vue en coupe d'un détail d'un filetage selon l'invention ;
- la figure 4 représente schématiquement une vue d'un procédé selon l'invention ;
- la figure 5 représente schématiquement une vue en coupe détaillée partielle d'une vis selon l'invention, la tête (non représentée) de la vis étant située au-dessus sur cette représentation ;
- la figure 6 représente schématiquement une vue en coupe détaillée d'un écrou selon l'invention.

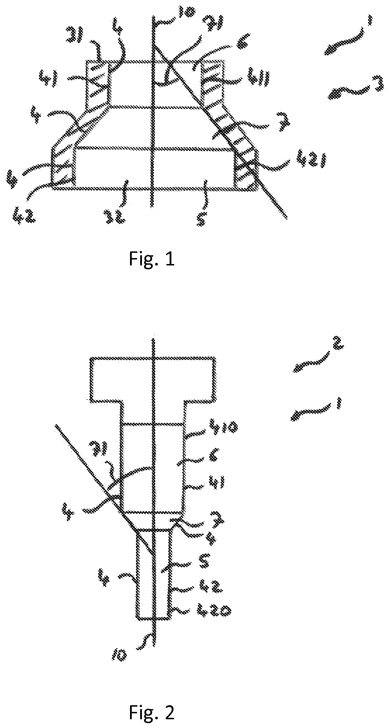

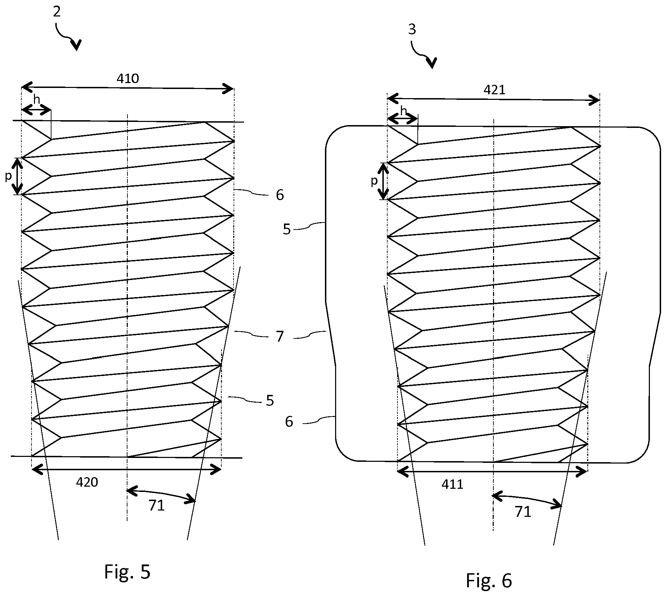

Ainsi et tel que visible sur les figures 1 à 6, la présente invention concerne tout d'abord un boulon 1 à dévissage freiné composé d'une vis 2 et d'un écrou standard ou d'un écrou 3 et d'une vis standard, ladite vis 2 ou ledit écrou 3 comprenant dans leur longueur axiale 10 au moins trois parties étagées de filetage continu 4, à savoir une partie d'introduction 5 pour introduire la vis 2 dans l'écrou 3, une partie de freinage 6 et une partie intermédiaire 7 reliant la partie d'introduction 5 à la partie de freinage 6.

Ce boulon 1 est caractérisé en ce que ladite partie de freinage 6 présente un diamètre de filetage 41 constant et différent du diamètre de filetage 42 de la partie d'introduction 5.

Selon l'invention, le boulon 1 comprend des moyens de freinage. Ces moyens de freinage sont représentés par les diamètres de filetage 41 constants sur toute la longueur de la partie de freinage, et sur sa circonférence, et supérieur pour une vis 2 et inférieur pour un écrou 3 au diamètre de filetage 42 de la partie d'introduction 5.

Un filetage continu signifie que le vissage et dévissage peuvent être continus sur toute la longueur du filetage disponible. L'étagement des trois parties signifie qu'elles se suivent les unes après les autres dans la longueur selon l'axe 10.

Grâce au boulon de l'invention, il est aisé d'introduire la vis dans l'écrou puis au fur et à mesure du vissage dans la partie intermédiaire 7, il est nécessaire de produire un effort croissant pour visser. Cet effort devient alors constant sur toute la longueur choisie de vissage sur la partie de freinage 6.

On peut obtenir un frettage des deux pièces du boulon 1.

Selon la configuration du boulon 1 selon l'invention, la longueur de la partie de freinage 6 peut être d'au moins un tiers de la longueur selon l'axe 10 de l'écrou.

Il faut un effort équivalent au dévissage de l'écrou sur la partie de freinage 6.

Les moyens de freinage fonctionnent grâce à l'élasticité relative du matériau de l'écrou.

Le boulon 1 selon l'invention est écologique puisque sa conception ne fait appel qu'à un seul matériau, généralement un métal ou alliage de métal tel que l'acier.

Les moyens de freinage de l'invention sont efficaces contre les vibrations et la sécurisation de la mécanique en mouvement comme par exemple dans des applications de turbines, le domaine du chemin de fer, le domaine naval, aéronautique, etc.

Selon l'invention, si la vis 2 comprend les moyens de freinage, un écrou standard, c'est-à-dire sans moyen de freinage peut être utilisé.

A contrario, si l'écrou 3 comprend les moyens de freinage, une vis standard, c'est-à-dire sans moyen de freinage peut être utilisée.

Avantageusement, la partie intermédiaire 7 présente une forme d'un filetage suivant un tronc de cône de révolution avec un demi-angle 71 au sommet compris entre 1° et 70°. Pour l'exprimer autrement, le diamètre de filetage de la partie intermédiaire 7 varie continument depuis le diamètre de filetage 42 de la partie d'introduction 5, jusqu'au diamètre de filetage 41 de la partie de freinage 6.

Des angles jusqu'à 20° sont de loin les plus avantageux pour que la partie intermédiaire 7 serve de guide à la vis entrain de pénétrer dans l'écrou, sans provoquer de frottement trop important qui entrainerait un arrachage de matière, et donc un grippage. Un angle préféré se situe autour de 15°.

Une forme équivalente à un tronc de cône de révolution permet d'augmenter de façon régulière l'effort à consentir pour le vissage dans cette partie.

Selon un mode particulier de l'invention, le ratio du diamètre de filetage de la partie ayant le plus petit diamètre de filetage sur le diamètre de filetage de la partie du boulon ayant le plus grand diamètre de filetage, soit le plus petit divisé par le plus grand s'établit entre 0,92 et 0,96.

La valeur de ce ratio au sein du boulon varie selon le choix des matériaux, par exemple si le matériau est un acier traité ou non traité thermiquement, ou encore selon sa classe de tolérance ou de la valeur des jeux de fonctionnement.

Plus la valeur de ce ratio est basse, plus le freinage est important mais elle ne doit pas être trop basse, sinon il se pourrait qu'avec les efforts habituellement appliqués par une visseuse, une vis ne puisse plus pénétrer dans la partie de freinage 6 de l'écrou 3, ou que sa partie de freinage 6 ne puisse plus pénétrer dans un écrou, ou encore que son introduction provoque une déformation de l'écrou au-delà du domaine élastique, ce qui fait qu'il ne pourrait plus revenir à sa forme initiale. A l'opposé un ratio trop faible fait courir le risque que selon les jeux présents, et selon la réalité des dimensions de la vis et de l'écrou à l'intérieur de leur intervalle de tolérance, certains assemblages ne soient plus du tout freinés.

Préférentiellement, ledit filetage 4 présente un profil 43 en forme de triangle ou de trapèze, son sommet 44 pouvant aussi être arrondi.

Un profil en forme de triangle ou de trapèze permet de répartir la force de freinage sur un maximum de surface des flancs 430 du filetage 4 de façon uniforme et permet d'éviter ainsi des détériorations telles que le grippage, l'arrachement. Il se produit un écrouissage et un tassement de surface. Ainsi, il est possible de visser et dévisser l'écrou 3 sur la vis 2 sur la partie de freinage 6 sur toute sa longueur. Un graissage peut être appliqué sur le filetage de l'écrou afin de faciliter le vissage.

Selon l'invention, le filetage présente un pas p identique depuis la partie d'introduction 5, le long de la partie intermédiaire 7, et dans la partie de freinage 6. Le filetage présente également une hauteur h identique le long des trois parties.

Cette caractéristique permet, en particulier pour des filetages de la vis arrondis ou coupés en leur sommet, de s'assurer que le contact entre la vis et l'écrou se fait toujours sur les faces du filetage, et jamais entre la crête du filetage de la vis et le fond du filetage de l'écrou.

Il est bien connu en mécanique que l'identité absolue de deux dimensions n'existe pas, du fait des tolérances de fabrication ou des déformations subies par les vis et/ou les écrous.

En conséquence, l'expression « identique » doit être comprise dans le cadre de la présente invention comme suffisamment proches pour qu'on obtienne effectivement un contact sur les faces du filetage et non pas sur leurs crêtes.

Cet avantage est particulièrement important au niveau de la partie de freinage 6, où les efforts de frottement entre la vis et l'écrou deviennent importants, et où le contact surfacique permet d'éviter tout arrachage de matière, et donc réduit significativement le risque de grippage.

Lors de l'introduction d'une vis dans un écrou au niveau de la partie de freinage 6, le filet de la vis est, au moins par endroits, d'un diamètre plus grand que le filet de l'écrou. Pour passer, la vis doit pousser l'écrou, qui se déforme très légèrement dans le domaine élastique et peut revenir en tout ou partie vers sa forme initiale. Ceci est vrai en phase de vissage comme de dévissage, ce qui donne sa grande stabilité à cet assemblage, qui ne se défait pas sous l'effet de vibrations notamment.

L'invention concerne aussi une vis 2 à dévissage freiné comprenant dans la longueur axiale 10 au moins trois parties étagées de filet continu, à savoir une partie d'introduction 5 pour introduire la vis 2 dans l'écrou 3, une partie de freinage 6 et une partie intermédiaire 7 reliant la partie d'introduction 5 à la partie de freinage 6.

Cette vis 2 est caractérisée en ce que le diamètre de filetage 420 de la partie d'introduction 5 est inférieur au diamètre de filetage 410 de la partie de freinage 6, le diamètre de filetage 410 étant de valeur constante sur toute la longueur de la partie de freinage 6 ainsi que sur toute sa circonférence, le filetage étant identique tant en pas p qu'en hauteur h sur toute la longueur des parties d'introduction 5, intermédiaire 7 et de freinage 6.

Cette différence entre les diamètres de filetage 420 et 410 permet d'obtenir l'effet de freinage lors du vissage.

De façon avantageuse, la partie d'introduction 5 de la vis 2 représente au minimum un pas p de filetage.

Un pas p de filetage 4 dans la partie d'introduction 5 est utile pour l'introduction effective de la vis 2 dans un écrou.

De façon préférentielle, la partie de freinage 6 de la vis 2 représente au minimum un pas p de filetage.

Un pas p de filetage 4 est utile dans la partie de freinage 6 de la vis 2 pour obtenir un effet de frein.

La vis 2 peut être obtenue par exemple par roulage, ou par usinage.

Selon un autre mode de réalisation, la vis 2 est trilobée, de type triangulaire.

La vis 2 peut ainsi former lors du premier vissage une déformation triangulaire d'un écrou standard. La forme trilobée réduit les efforts lors du vissage. La vis 2 est ainsi plus résistante au desserrage, et a une meilleure tenue aux vibrations.

Selon un mode de réalisation particulier, le ratio entre le diamètre de filetage 420 de la partie d'introduction 5 de la vis 2 et le diamètre de filetage 410 de la partie de freinage 6 de la vis 2 est compris entre 0,96 et 0,92.

La valeur de ce ratio au sein d'une vis varie selon le choix des matériaux, par exemple si le matériau est un acier traité ou non traité thermiquement. Plus la valeur de ce ratio est basse, plus le freinage est important, avec les réserves et limites mentionnées plus haut.

Une vis 2 selon l'invention peut être fabriquée par usinage à partir d'une forme de diamètre de filetage plus grand que celle permettant de fileter la vis standard correspondante. On peut aussi prendre une vis standard, et y appliquer un procédé de fabrication additive.

L'invention concerne encore un écrou 3 à dévissage freiné comprenant dans la longueur axiale 10 au moins trois parties étagées de filet continu, à savoir une partie d'introduction 5 pour introduire une vis dans l'écrou 3, une partie de freinage 6 et une partie intermédiaire 7 reliant la partie d'introduction 5 à la partie de freinage 6.

Cet écrou 3 est caractérisé en ce que le diamètre de filetage 421 de la partie d'introduction 5 est supérieur au diamètre de filetage 411 de la partie de freinage 6, le diamètre de filetage 411 étant de valeur constante sur toute la longueur de la partie de freinage 6, ainsi que sur toute sa circonférence.

Cette différence entre les diamètres de filetage 421 et 411 permet d'obtenir l'effet de freinage lors du vissage.

Selon encore un autre mode de réalisation, la partie d'introduction 5 de l'écrou 3 représente au minimum un pas p de filetage.

Un pas p de filetage 4 dans la partie d'introduction 5 est utile pour l'introduction effective d'une vis dans l'écrou 3.

Selon un mode de réalisation préféré, la partie de freinage 6 de l'écrou 3 représente au minimum un pas p de filetage.

Un pas p de filetage 4 est utile dans la partie de freinage 6 de l'écrou 3 pour obtenir un effet de frein.

Selon un mode de réalisation particulier, le ratio entre le diamètre de filetage 411 de la partie de freinage 6 de l'écrou 3 et le diamètre de filetage 421 de la partie d'introduction 5 de l'écrou 3 est compris entre 0,96 et 0,92.

La valeur de ce ratio au sein de l'écrou 3 varie selon le choix des matériaux, par exemple si le matériau est un acier traité ou non traité thermiquement.

Plus la valeur de ce ratio est basse, plus le freinage est important, avec les réserves et limites mentionnées plus haut.

Tous les avantages de l'invention qui s'applique au boulon 1, s'appliquent également à la vis 2 et à l'écrou 3, quand ils sont considérés de façon individuelle et séparée.

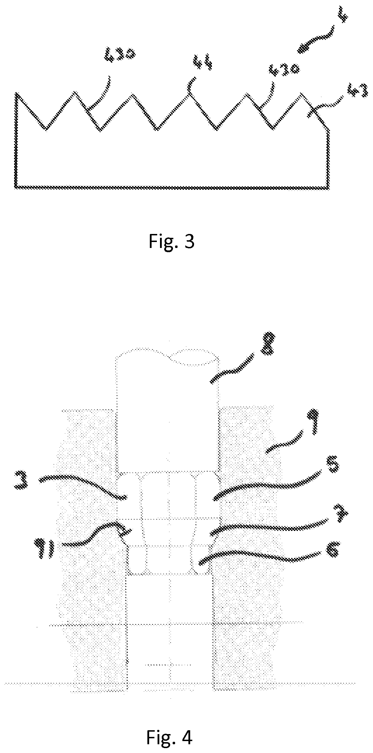

L'invention concerne enfin un procédé de fabrication d'un écrou 3 tel que représenté en exemple en figure 4.

Ce procédé est caractérisé en ce que :
- on introduit un écrou de diamètre de filetage constant, dans une filière comportant une première partie cylindrique de section sensiblement égale à la section de l'écrou, une deuxième partie cylindrique homothétique à la première partie cylindrique, de diamètre plus petit et munie en son extrémité éloignée de la première partie cylindrique d'un fond, et une partie intermédiaire reliant la première partie cylindrique à la deuxième partie cylindrique de manière continue,
- on réalise un filage par frappe à froid ou par presse sur l'un des sommets 31 de l'écrou en sorte de réduire, sur une partie de sa longueur axiale 10, ses dimensions transversales ainsi que le diamètre de filetage 421 interne de son trou taraudé 32.

C'est le filage du diamètre externe de l'écrou 3 qui entraine une réduction du diamètre de filetage 421 interne du trou taraudé 32. Le degré de filage est directement proportionnel à la réduction de diamètre. Le diamètre de filetage 421 peut donc devenir le diamètre de filetage 411.

Ce filage peut être effectué sur une longueur au choix sur l'écrou 3.

Il n'est pratiqué aucun affaiblissement sur l'écrou 3, il conserve toute sa résistance mécanique, qui peut même être légèrement améliorée du fait de l'écrouissage.

L'avantage de l'utilisation d'un filage par frappe à froid ou par presse pour obtenir l'écrou 3 est l'écrouissage de la partie réduite. L'effet frein sera donc plus important. Le filage peut être libre ou contenu dans une matrice.

La figure 4 représente un exemple de filage contenu dans une matrice 9 où un écrou standard subit un filage selon le procédé de l'invention pour obtenir un écrou 3. Un poinçon 8 permet le filage de l'écrou dans la matrice 9.

Dans le cas de l'utilisation d'un filage contenu dans une matrice, telle que la matrice 9, le rayon 91 de la concavité à l'entrée de la matrice 9 doit répondre aux standards de l'homme du métier.

Mais pour obtenir l'écrou 3, il reste tout à fait possible d'utiliser d'autres méthodes. Il s'agit par exemple d'utiliser la forge, l'usinage, le taraudage avec un taraud étagé, des traitements thermiques particuliers.

Le boulon 1 n'est pas limité en forme externe. La tête de la vis 2 peut donc avoir la forme courante à 6 pans. De même, l'écrou 3 peut être borgne.

## Revendications

1. Boulon (1) à dévissage freiné composé d'une vis et d'un écrou, ladite vis (2) ou ledit écrou (3) comprenant dans le sens axial (10) au moins trois parties étagées de filetage continu (4), à savoir une partie d'introduction (5) pour introduire la vis (2) dans l'écrou (3), une partie de freinage (6) et une partie intermédiaire (7) reliant la partie d'introduction (5) à la partie de freinage (6), **caractérisé en ce que** ladite partie de freinage (6) présente un diamètre de filetage (41) constant et plus grand si elle appartient à la vis, plus petit si elle appartient à l'écrou, que le diamètre de filetage (42) de la partie d'introduction (5).

2. Boulon (1) selon la revendication précédente dans lequel le filetage continu (4) présente le même pas (p) et la même hauteur (h) le long de la partie d'introduction (5), la partie intermédiaire (7) et la partie de freinage (6).

3. Boulon (1) selon l'une des revendications précédentes dans lequel la partie d'introduction (5) représente au minimum un pas (p) de filetage.

4. Boulon (1) selon l'une des revendications précédentes dans lequel la partie de freinage (6) représente au minimum un pas (p) de filetage, en particulier la longueur de la partie de freinage (6) est d'au moins un tiers de la longueur axiale de l'écrou.

5. Boulon (1) selon l'une des revendications précédentes dans lequel le ratio entre le diamètre de filetage (42) de la partie d'introduction (5) et le diamètre de filetage (41) de la partie de freinage (6) pour une vis, son inverse pour un écrou, est compris entre 0,92 et 0,96.

6. Vis (2) destinée à collaborer avec un écrou (3) pour former un boulon (1) selon l'une des revendications précédentes, **caractérisée en ce que** ladite vis (2) comprend dans le sens axial (10) au moins trois parties étagées de filetage continu (4), à savoir une partie d'introduction (5) pour introduire la vis (2) dans l'écrou (3), une partie de freinage (6) et une partie intermédiaire (7) reliant la partie d'introduction (5) à la partie de freinage (6), ladite partie de freinage (6) présentant un diamètre de filetage (41) constant et plus grand que le diamètre de filetage (42) de la partie d'introduction (5), et ledit filetage continu (4) présentant le même pas (p) et la même hauteur (h) le long de la partie d'introduction (5), la partie intermédiaire (7) et la partie de freinage (6).

7. Ecrou (3) destinée à collaborer avec une vis (2) pour former un boulon (1) selon l'une des revendications 1 à 5, **caractérisé en ce que** ledit écrou (3) comprend dans le sens axial (10) au moins trois parties étagées de filetage continu (4), à savoir une partie d'introduction (5) pour introduire la vis (2) dans l'écrou (3), une partie de freinage (6) et une partie intermédiaire (7) reliant la partie d'introduction (5) à la partie de freinage (6), ladite partie de freinage (6) présentant un diamètre de filetage (41) constant et plus petit que le diamètre de filetage (42) de la partie d'introduction (5), et ledit filetage continu (4) présentant le même pas (p) et la même hauteur (h) le long de la partie d'introduction (5), la partie intermédiaire (7) et la partie de freinage (6).

8. Procédé de fabrication d'un écrou (3) selon la revendication précédente **caractérisé en ce que** :
- on introduit un écrou de diamètre de filetage constant, dans une filière comportant une première partie cylindrique de section sensiblement égale à la section de l'écrou, une deuxième partie cylindrique homothétique à la première partie cylindrique, de diamètre plus petit et munie en son extrémité éloignée de la première partie cylindrique d'un fond, et une partie intermédiaire reliant la première partie cylindrique à la deuxième partie cylindrique de manière continue,
- on réalise un filage par frappe à froid ou par presse sur l'un des sommets (31) de l'écrou (3) pour forcer l'écrou jusque dans la deuxième partie cylindrique en sorte de réduire, sur une partie de sa longueur axiale (10), ses dimensions transversales ainsi que son diamètre de filetage.

9. Procédé de fabrication selon la revendication précédente dans lequel la partie intermédiaire est inclinée par rapport à l'axe des cylindres d'un angle au plus égal à 20°.

## Patentansprüche

1. Bolzen (1) mit gebremster Losschraubung, der aus einer Schraube und einer Mutter besteht, wobei die Schraube (2) oder die Mutter (3) in axialer Richtung (10) mindestens drei abgestufte, kontinuierliche Gewindeabschnitte (4) aufweist, nämlich einen Einführungsabschnitt (5) zum Einführen der Schraube (2) in die Mutter (3), ein Bremsteil (6) und ein Zwischenteil (7), das das Einführungsteil (5) mit dem Bremsteil (6) verbindet, **dadurch gekennzeichnet, dass** das Bremsteil (6) einen konstanten Gewindedurchmesser (41) aufweist der größer ist, wenn es zur Schraube gehört, kleiner, wenn es zur Mutter gehört, als der Gewindedurchmesser (42) des Einführungsteils (5).

2. Bolzen (1) nach dem vorigen Anspruch, bei der das durchgehende Gewinde (4) die gleiche Steigung (p) und Höhe (h) entlang des Einlegeteils (5), des Zwischenteils (7) und des Bremsteils (6) aufweist.

3. Bolzen (1) nach einem der vorhergehenden Ansprüche, bei dem das Einführungsteil (5) mindestens eine Gewindesteigung (p) darstellt.

4. Bolzen (1) nach einem der vorstehenden Ansprüche, bei der das Bremsteil (6) mindestens eine Gewindesteigung (p) darstellt, insbesondere die Länge des Bremsteils (6) mindestens ein Drittel der axialen Länge der Mutter beträgt.

5. Bolzen (1) nach einem der vorhergehenden Ansprüche, wobei das Verhältnis zwischen dem Gewindedurchmesser (420) des Einführungsteils (5) und dem Gewindedurchmesser (410) des Bremsteils (6) für eine Schraube, deren Inverse für eine Mutter, zwischen 0,92 und 0,96 liegt.

6. Schraube (2) zum Zusammenwirken mit einer Mutter (3) zum Bilden eines Bolzens (1) nach einem der vorhergehenden Ansprüche, **dadurch gekennzeichnet, dass** die Schraube (2) in axialer Richtung (10) mindestens drei abgestufte kontinuierliche Gewindeteile (4) umfasst, nämlich ein Einführungsteil (5) zum Einführen der Schraube (2) in die Mutter (3), ein Bremsteil (6) und ein Zwischenteil (7), das das Einführungsteil (5) mit dem Bremsteil (6) verbindet, wobei das Bremsteil (6) einen konstanten Gewindedurchmesser (41) aufweist und größer als der Gewindedurchmesser (42) des Einführungsteils (5) ist, und das kontinuierliche Gewinde (4) die gleiche Steigung (p) und Höhe (h) entlang des Einführungsteils (5), des Zwischenteils (7) und des Bremsteils (6) aufweist.

7. Mutter (2) zum Arbeiten mit einer Schraube (3), um einen Bolzen (1) nach einem der Ansprüche 1 bis 5 zu bilden, **dadurch gekennzeichnet, dass** die Mutter (3) in axialer Richtung (10) mindestens drei abgestufte kontinuierliche Gewindeabschnitte (4) umfasst, nämlich einen Einführungsabschnitt (5) zum Einführen der Schraube (2) in die Mutter (3), einen Bremsabschnitt (6) und einen Zwischenabschnitt (7), der den Einführungsabschnitt (5) mit dem Bremsabschnitt (6) verbindet, wobei das Bremsteil (6) einen konstanten Gewindedurchmesser (41) aufweist und kleiner als der Gewindedurchmesser (42) des Einführungsteils (5) ist, und das kontinuierliche Gewinde (4) die gleiche Steigung (p) und Höhe (h) entlang des Einführungsteils (5), des Zwischenteils (7) und des Bremsteils (6) aufweist.

8. Verfahren zur Herstellung einer Mutter (3) nach dem vorstehenden Anspruch, **dadurch gekennzeichnet, dass**:
- eine Mutter mit konstantem Gewindedurchmesser in eine Matrize eingeführt wird, die einen ersten zylindrischen Teil mit im Wesentlichen gleichem Querschnitt wie der Querschnitt der Mutter, einen zweiten zylindrischen Teil, der homothetisch zu dem ersten zylindrischen Teil mit kleinerem Durchmesser ist und an seinem vom ersten zylindrischen Teil entfernten Ende mit einem Boden versehen ist, und einen Zwischenteil umfasst, der den ersten zylindrischen Teil kontinuierlich mit dem zweiten zylindrischen Teil verbindet,
- ein Kaltstauch- oder Pressdrücken an einer der Seiten (31) der Mutter (3) durchgeführt wird, um die Mutter in den zweiten zylindrischen Teil zu drücken, um über einen Teil ihrer axialen Länge (10) ihre Querabmessungen sowie ihren Gewindedurchmesser zu reduzieren.

9. Herstellungsverfahren nach dem vorhergehenden Anspruch, bei dem das Zwischenteil in Bezug auf die Achse der Zylinder um einen Winkel von höchstens 20° geneigt ist.

## Claims

1. Bolt (1) with braked unscrewing consisting of a screw and a nut, said screw (2) or said nut (3) comprising in the axial direction (10) at least three stepped portions of continuous thread (4), namely an introduction portion (5) for introducing the screw (2) into the nut (3), a braking portion (6) and an intermediate portion (7) connecting the introduction portion (5) to the braking portion (6), **characterized in that** said braking portion (6) has a thread diameter (41) that is constant and larger if it belongs to the screw, smaller if it belongs to the nut, than the thread diameter (42) of the introduction portion (5).

2. Bolt (1) according to the previous claim wherein the continuous thread (4) has the same pitch (p) and the same height (h) along the introduction portion (5), the intermediate portion (7) and the braking portion (6).

3. Bolt (1) according to one of the previous claims wherein the introduction portion (5) represents at least one pitch (p) of threading.

4. Bolt (1) according to one of the previous claims wherein the braking portion (6) represents at least one pitch (p) of threading, in particular the length of the braking portion (6) is at least one third of the axial length of the nut.

5. Bolt (1) according to one of the previous claims wherein the ratio between the thread diameter (420) of the introduction portion (5) and the thread diameter (410) of the braking portion (6) for a screw, its inverse for a nut, is between 0.92 and 0.96.

6. Screw (2) intended for collaborating with a nut (3) to form a bolt (1) according to one of the previous claims, **characterized in that** said screw (2) comprises in the axial direction (10) at least three stepped portions of continuous thread (4), namely an introduction portion (5) for introducing the screw (2) into the nut (3), a braking portion (6) and an intermediate portion (7) connecting the introduction portion (5) to the braking portion (6), said braking portion (6) having a thread diameter (41) that is constant and larger than the thread diameter (42) of the introduction portion (5), and said continuous thread (4) having the same pitch (p) and the same height (h) along the introduction portion (5), the intermediate portion (7) and the braking portion (6).

7. Nut (3) intended for collaborating with a screw (2) to form a bolt (1) according to one of claims 1 to 5, **characterized in that** said nut (3) comprises in the axial direction (10) at least three stepped portions of continuous thread (4), namely an introduction portion (5) for introducing the screw (2) into the nut (3), a braking portion (6) and an intermediate portion (7) connecting the introduction portion (5) to the braking portion (6), said braking portion (6) having a thread diameter (41) that is constant and smaller than the thread diameter (42) of the introduction portion (5), and said continuous thread (4) having the same pitch (p) and the same height (h) along the introduction portion (5), the intermediate portion (7) and the braking portion (6).

8. Manufacturing method of a nut (3) according to the previous claim, **characterized in that**:
- a nut of constant thread diameter is introduced into a die having a first cylindrical portion of section substantially equal to the section of the nut, a second cylindrical portion homothetic to the first cylindrical portion, of smaller diameter and provided in its end far from the first cylindrical portion of a bottom, and an intermediate portion connecting the first cylindrical portion to the second cylindrical portion continuously,
- an extrusion by cold stamping or press is performed on one of the tops (31) of the nut (3) in order to force the nut into the second cylindrical portion so as to reduce, over a portion of its axial length (10), its transverse dimensions as well as its thread diameter.

9. Manufacturing method according to the previous claim wherein the intermediate portion is inclined relative to the axis of the cylinders by an angle at most equal to 20°.
